(19) Europäisches Patentamt
European Patent Office
Office européen des brevets

(11) Publication number: 0 070 642 B1

(12) # EUROPEAN PATENT SPECIFICATION

(45) Date of publication of patent specification: 09.10.85

(51) Int. Cl.⁴: C 01 G 35/00

(21) Application number: 82303518.3

(22) Date of filing: 05.07.82

(54) **A method and apparatus for producing tantalum pentoxide.**

(30) Priority: 17.07.81 JP 110664/81

(43) Date of publication of application: 26.01.83 Bulletin 83/04

(45) Publication of the grant of the patent: 09.10.85 Bulletin 85/41

(84) Designated Contracting States: BE DE FR GB NL

(56) References cited:
CH-A- 377 325
CH-A- 476 643
DE-A-2 927 835
US-A-2 950 966

CHEMICAL ABSTRACTS, vol.96, no.18, May 1982, page 158, abstract no.145409g, Columbus, Ohio (US)

(73) Proprietor: Kabushiki Kaisha Toshiba
72, Horikawa-cho Saiwai-ku
Kawasaki-shi Kanagawa-ken 210 (JP)

(72) Inventor: Naoyuki, Hirate c/o Patent Division
Tokyo Shibaura Denki K. K. 72 Horikawa-cho
Saiwai-ku Kawasaki-shi Kanagawa-ken (JP)
Inventor: Hiroshi, Endo c/o Patent Division
Tokyo Shibaura Denki K. K. 72 Horikawa-cho
Saiwai-ku Kawasaki-shi Kanagawa-ken (JP)
Inventor: Masaru, Hayashi c/o Patent Division
Tokyo Shibaurad Denki K. K. 72 Horikawa-cho
Saiwai-ku Kawasaki-shi Kanagawa-ken (JP)

(74) Representative: Eyles, Christopher Thomas et al
BATCHELLOR, KIRK & EYLES 2 Pear Tree Court
Farringdon Road
London, EC1R 0DS (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 070 642 B1

## Description

Background of the invention

This invention relates to a method and apparatus for producing tantalum pentoxide. More specifically, it relates to a method and apparatus for manufacturing tantalum pentoxide $Ta_2O_5$ from tantalum hydroxide $Ta(OH)_5$ containing hydrofluoric compounds.

There have been increasing demands for single crystalline lithium tantalate of high purity for use in producing, for example, surface acoustic wave filters. Since naturally occurring tantalate salts are of limited quantity and, in any event, expensive to obtain, the prior art has recovered the $Ta_2O_5$ from scrap products containing tantalum. These scraps could consist of scraps of tantalum products or scraps produced during the production of tantalum products.

In the prior art, $Ta_2O_5$ is produced or recovered, for example, by the following process. A Ta source such as tantalate salts or a scrap product containing tantalum is dissolved in a solution of hydrofluoric acid. Sulphuric acid and methyl isobutyl ketone (MIBK) are added to the solution, and Ta is, thereby, extracted. Impurities in the Ta source such as, for example, niobium, silicon, iron, aluminum, calcium, etc. are extracted together with the extracted Ta, and are then removed by a reverse extraction method, using sulphuric acid and hydrofluoric acid. Next, a potassium salt, such as potassium carbonate, is added to the extraction acid, causing the Ta to be deposited in the form of potassium tantalum fluoride $K_2TaF_7$. The deposit is then filtered and is dissolved again in warm water (at approximately 80°C). The dissolved solution is then hydrolyzed by the addition of aqueous ammonia, and a precipitate of tantalum hydroxide is obtained. After filtering the tantalum hydroxide, it is heated (at approximately 900°C) to give $Ta_2O_5$.

In this method of manufacture, however, a residue of hydrofluoric acid used for dissolving the Ta source remains in the $Ta(OH)_5$, and is not removed by the additional processing discussed above. As a result, the fluorine in the hydrofluoric acid reacts with the tantalum to produce tantalum fluoride $TaF_5$, thus reducing the purity of the $Ta_2O_5$ obtained. This impurity adversely affects the growth of single crystalline lithium tantalate. Additionally, since the boiling point of $TaF_5$ is low (229.5°C), it volatilizes and escapes during heating so that there is a progressive loss of Ta, resulting in lower yield.

Summary of the invention

The invention seeks to provide a method for producing $Ta_2O_5$ from $Ta(OH)_5$ containing fluorine compounds such as hydrofluoric acid with high yield and high purity.

The invention also seeks to provide an apparatus for producing $Ta_2O_5$ of high purity from $Ta(OH)_5$ containing fluorine compounds such as hydrofluoric acid.

According to the invention we provide a method for producing tantalum pentoxide from tantalum hydroxide containing fluorine compounds without substantial co-production of tantalum fluorides, said method comprising heating said tantalum hydroxide containing fluoride compounds to a temperature of at least about 800°C for a time sufficient to convert said tantalum hydroxide to tantalum pentoxide and recovering said tantalum pentoxide, characterised in that said heating is conducted in the presence of added steam and the method comprises the step of separating the gaseous reaction products and unreacted steam from said tantalum pentoxide product, whereby the fluorine compounds are separated with said gaseous reaction products and substantially all the tantalum values are recovered as the tantalum pentoxide product.

Thus powdered $Ta(OH)_5$ containing fluorine compounds is heated to a temperature sufficient to form $Ta_2O_5$ (approximately 900°C) in accordance with the following formula:

$$2Ta(OH)_5 \rightarrow Ta_2O_5 + 5H_2O \qquad (1)$$

As previously discussed, $TaF_5$ is produced by the residual fluorine compounds. According to the invention, this $TaF_5$ is converted into $Ta_2O_5$. Additional steam is introduced into the reaction system to hydrolyze the $TaF_5$ into $Ta_2O_5$ and hydrofluoric acid (HF) in accordance with the following formula:

$$2TaF_5 + 5H_2O \rightarrow Ta_2O_5 + 10HF \qquad (2)$$

In this way $Ta(OH)_5$ containing fluorine compounds is changed into $Ta_2O_5$ by simultaneous dehydration and defluorination. The method mentioned above effectively reduces the amount of $TaF_5$ contained in the produced $Ta_2O_5$ thereby increasing purity and yield.

According to another embodiment of the invention, an apparatus for manufacturing $Ta_2O_5$ from $Ta(OH)_5$ containing fluorine compounds is provided. The apparatus comprises a reactor having a reaction zone in which said tantalum hydroxide is received, a heating means for heating said reaction zone and an outlet for exhausting gaseous reaction products and unreacted steam from the reaction zone, characterised in that a steam supply means is provided for introducing steam into said reaction zone, which steam supply means comprises a container means for receiving and containing water, a heating means for converting said water to steam, an air pump for supplying air to said container means, and a steam supply pipe communicating with a spray pipe having small holes along its length for spraying steam into said reaction zone for introducing steam generated in said container means into said reactor.

Brief description of the drawings

Figure 1 is a schematic illustration of one form of the apparatus of the present invention for

producing $Ta_2O_5$ from $Ta(OH)_5$ powder containing fluorine compounds;

Figure 2 is a perspective view of the reaction chamber shown in Figure 1 (with the inner cover 54 omitted for the sake of clarity);

Figure 3 is a graph showing a relationship between the amount of fluorine F contained in the $Ta_2O_5$, produced by the apparatus of Figure 1, and flow rate of the introduced steam; and,

Figure 4 is a graph showing a relationship between the amount of fluorine F contained in the $Ta_2O_5$, produced by the apparatus of Figure 1, and heating time.

Detailed description of the preferred embodiment

In Figure 1, a reactor 12 made of refractory material is provided. Reactor 12 has a reaction chamber 14 in which powdered $Ta(OH)_5$ 16 is introduced and placed on a base member 20 within the chamber. Reaction chamber 14 is provided with a heating means 22 positioned along the side walls 24 of the reactor. Chamber 14 also includes a cover 26 which closes the chamber during the reaction process. An exhaust outlet 28 in the side wall of the chamber is used to completely separate the gaseous reaction products and unreacted steam from the tantalum pentoxide produce. Exhaust gases, such a hydrofluoric acid, generated steam and unreacted steam in the chamber is removed through exhaust outlet 28. Steam from a steam generator 32 is introduced into chamber 14 through a steam supply pipe 30. Steam generator 32 comprises a water container 34, a boiling heater 36, an air pump 38 and air supply pipe 40. Water 42 within water container 34 is boiled by the boiling heater 36. Air is supplied by air pump 38 through air supply pipe 40 into boiling water 42 so that steam is easily generated. The generated steam is supplied into reaction chamber or zone 14 through steam supply pipe 30. Air pump 38 and the temperature of heater 36 controls the flow rate of the steam supplied to the reaction zone.

A more detailed explanation regarding the structure of reactor 12 is made with reference to Fig. 2. Reactor 12 is constructed of refractory material and has a cube-like form. The outer dimensions of reactor 12 are approximately 1 m×1 m×1m having a wall thickness of approximately 10 cm. Heating means 22 comprises spaced heating rods 44 made of, for example, silicon carbonate and embedded within the walls 24 of chamber 14. The ends of each heating rod 44 extends to the outside of the reactor through the walls of reaction chamber 14. Electric current from a power source (not shown) is supplied to each end of heating rods 44 for heating the interior of the reaction chamber. The power consumption of the entire heating rod assembly is approximately 52 kW.

Several vessels 18 containing $Ta(OH)_5$ powder 16 are placed on base member 20 at the bottom of the reaction chamber or zone. Steam supply pipe 30 entering reaction chamber 14 branches off into three spray pipes 46, 48, 50. Each of the spray pipes 46, 48 and 50 are small holes 52 along its length for spraying out steam supplied by pipe 30. Steam supplied by pipe 30 is sprayed on the $Ta(OH)_5$ powder through holes 52. An inner cover 54 is provided over the spray pipe, as shown in Fig. 1, for preventing dispersion of the steam.

When operating the apparatus, the temperature inside the reaction chamber 14 should normally be kept at about 800°C or higher. The amount of steam needed will depend upon the amount of $Ta(OH)_5$ that has been placed in the reaction zone. It is preferred that the tantalam hydroxide be heated for at least about half an hour and the steam introduced at a flow rate of at least 2 liters/minute per kg of tantalum hydroxide. It is also preferred that the steam be introduced at a temperature from about 70—100°C. Fig. 3 shows the relationship between the amount of steam (liters/min) and the amount of F(PPM) contained in $Ta_2O_5$ for various amounts of $Ta(OH)_5$ powder (kg) used as a starter. The data shown in Fig. 3 was obtained by adding $Ta(OH)_5$ powder containing about 5,000 ppm of F to the reaction zone, the temperature of the steam was maintained between 70—100°C, and the reaction chamber, having a volume of 120 liters, was maintained at about 900°C for approximately 2 hours. It is clear from Fig. 3 that the amount of F contained in the $Ta_2O_5$ product is substantially reduced by introducing steam, and the amount of the steam required depends upon the amount of the $Ta(OH)_5$ powder charged. The larger the amount of $Ta(OH)_5$ powder charged, the longer the required flow rate of steam. For example, if it is required to obtain $Ta_2O_5$ containing below 50 ppm of F, at least 20 liters/minute of steam should be supplied to 10 kg of $Ta(OH)_5$ powder, while at least 80 liters/minute of steam should be supplied for 20 kg of $Ta(OH)_5$ powder.

Fig. 4 shows the relationship between heating time (H) and the amount of F contained in the $Ta_2O_5$ for various amounts of $Ta(OH)_5$ powder (kg). The data shown in Fig. 4 was obtained by adding $Ta(OH)_5$ powder containing about 5000 ppm of F to the reaction zone, the flow rate of steam was approximately 500 liters/minute with a temperature of 70—100°C; and the reaction chamber, having a volume of 120 liters, was maintained at about 900°C. It is clear from Fig. 4 that e.g. about 0.5 hours of heating a charge of 10 kg will reduce the amount of F contained in $Ta_2O_5$ below 100 ppm.

According to a prior art comparison experiment using the apparatus mentioned above, substantial improvements in yield and purity were obtained. When 10 kg and 20 kg of $Ta(OH)_5$ containing 4700 ppm and 5100 ppm of F were placed in the reaction zone, and steam was introduced for 2 hours at flow rates of 400 liters/min and 600 liters/min, respectively, quantitative analysis of the $Ta_2O_5$ powder obtained, by the Alfson absorptiometric method, showed the presence of fluorine in amounts below 10 ppm in each case. The amounts of fluorine in $Ta_2O_5$ obtained by conventional

methods, however, were 360 ppm and 540 ppm, respectively.

## Claims

1. A method for producing tantalum pentoxide from tantalum hydroxide containing fluorine compounds without substantial co-production of tantalum fluorides, said method comprising heating said tantalum hydroxide containing fluoride compounds to a temperature of at least about 800°C for a time sufficient to convert said tantalum hydroxide to tantalum pentoxide and recovering said tantalum pentoxide, characterised in that said heating is conducted in the presence of added steam and the method comprises the step of separating the gaseous reaction products and unreacted steam from said tantalum pentoxide product, whereby the fluorine compounds are separated with said gaseous reaction products and substantially all the tantalum values are recovered as the tantalum pentoxide product.

2. A method according to claim 1, wherein said tantalum hydroxide is heated for at least about half an hour.

3. A method according to claim 1, or 2, wherein said heating is effected in a reaction zone into which steam is introduced at a flow rate of at least about 2 liters/minute per kg of tantalum hydroxide.

4. A method according to any one of claims 1 to 3, wherein said steam is introduced at a temperature of from about 70—100°C.

5. An apparatus for producing tantalum pentoxide from tantalum hydroxide containing fluorine compounds comprising a reactor having a reaction zone in which said tantalum hydroxide is received, a heating means for heating said reaction zone and an outlet for exhausting gaseous reaction products and unreacted steam from the reaction zone, characterised in that a steam supply means is provided for introducing steam into said reaction zone, which steam supply means comprises a container means for receiving and containing water, a heating means for converting said water to steam, an air pump for supplying air to said container means, and a steam supply pipe communicating with a spray pipe having small holes along its length for spraying steam into said reaction zone for introducing steam generated in said container means into said reactor.

6. An apparatus according to claim 5, wherein said reactor is made of refractory material.

7. An apparatus according to claim 5 or 6, wherein said steam supply pipe is branched into a plurality of spray pipes each having spray holes along its length for spraying steam into said reaction zone.

## Patentansprüche

1. Verfahren zur Herstellung von Tantalpentoxid aus Fluorverbindungen enthaltendem Tantalhydroxid ohne wesentliche Nebenerzeugung von Tantalfluoriden, bei welchem Verfahren das die Fluoridverbindungen enthaltende Tantalhydroxid auf eine Temperatur von wenigstens etwa 800°C über eine Zeit erhitzt wird, die ausreicht, das Tantalhydroxid in Tantalpentoxid zu überführen, und bei dem das Tantalpentoxid rückgewonnen wird, dadurch gekennzeichnet, daß die Erwärmung in Gegenwart von zugeführtem Dampf erfolgt und daß die gasförmigen Reaktionsprodukte und der nicht in Reaktion getretene Dampf vom Tantalpentoxidprodukt abgetrennt werden, wodurch die Fluorverbindungen mit den gasförmigen Reaktionsprodukten abgetrennt und im wesentlichen sämtliche Tantalbestandteile rückgewonnen werden in Form des Tantalpentoxidproduktes.

2. Verfahren nach Anspruch 1, dadurch gekennzeichnet, daß das Tantalhydroxid für wenigstens etwa eine halbe Stunde erhitzt wird.

3. Verfahren nach Anspruch 1 oder 2, dadurch gekennzeichnet, daß die Erwärmung in einer Reaktionszone durchgeführt wird, in die Dampf mit einer Strömungsmenge von wenigstens etwa 2 l/min. pro kg Tantalhydroxid eingeleitet wird.

4. Verfahren nach einem der Ansprüche 1 bis 3, dadurch gekennzeichnet, daß der Dampf mit einer Temperatur von etwa 70—100°C eingeleitet wird.

5. Vorrichtung zur Erzeugung von Tantalpentoxid aus Fluorverbindungen enthaltendem Tantalhydroxid mit einem Reaktor, der eine Reaktionszone, die das Tantalhydroxid aufnimmt, eine Erhitzungsvorrichtung zum Erwärmen der Reaktionszone sowie einen Auslaß aufweist zur Abgabe von gasförmigen Reaktionsprodukten und von nicht in Reaktion getretenem Dampf aus der Reaktionszone, dadurch gekennzeichnet, daß eine Dampfversorgungsvorrichtung vorgesehen ist zum Einführen von Dampf in die Reaktionszone, welche einen Behälter zur Aufnahme von Wasser, eine Heizvorrichtung zur Überführung des Wassers in Dampf und eine Luftpumpe zur Zufuhr von Luft zum Behälter aufweist und eine Dampfzuführleitung, die mit einer Sprühleitung in Verbindung steht, die kleine Löcher entlang ihrer Ausdehnung aufweist zum Einsprühen von Dampf in die Reaktionszone, um im Behälter erzeugten Dampf in den Reaktor einzuleiten.

6. Vorrichtung nach Anspruch 5, dadurch gekennzeichnet, daß der Reaktor aus feuerfestem Material besteht.

7. Vorrichtung nach Anspruch 5 oder 6, dadurch gekennzeichnet, daß die Dampfzuführleitung in eine Vielzahl von Sprühleitungen verzweigt, die sämtlich Sprühöffnungen entlang ihrer Ausdehnung aufweisen zum Einsprühen von Dampf in die Reaktionszone.

## Revendications

1. Procédé pour produire du pentoxyde de tantale à partir de composés fluorés contenant de l'hydroxyde de tantale pratiquement sans produire en même temps des fluorures de tantale qui consiste à chauffer lesdits composés fluorés

contenant de l'hydroxyde de tantale à une température d'au moins 800°C environ pendant un temps suffisant pour convertir ledit hydroxyde de tantale en pentoxyde de tantale et à récupérer ledit pentoxyde de tantale, caractérisé en ce qu'on procède audit chauffage en présence de vapeur d'eau ajoutée et en ce qu'une étape est prévue pour séparer les produits gazeux de réaction et la vapeur non réagie du pentoxyde de tantale produit, ce qui fait que les composés fluorés sont séparés des produits de réaction gazeux, tandis que pratiquement tout le tantale est récupéré sous la forme de pentoxyde de tantale.

2. Procédé selon la revendication 1 caractérisé en ce qu'on chauffe ledit hydroxyde de tantale pendant, au moins, une demi heure.

3. Procédé selon la revendication 1 ou 2 caractérisé en ce qu'on effectue ledit chauffage dans une zone de réaction dans laquelle de la vapeur est introduite à raison d'au moins deux litres/minute et par kg d'hydroxyde de tantale.

4. Procédé selon l'une quelconque des revendications 1 à 3 caractérisé en ce qu'on introduit ladite vapeur à une température comprise entre environ 70—100°C.

5. Appareil pour produire du pentoxyde de tantale à partir de composés fluorés contenant de l'hydroxyde de tantale qui comprend un réacteur ayant une zone de réaction dans laquelle ledit hydroxyde de tantale est reçu, des moyens pour chauffer ladite zone de réaction et une sortie pour évacuer les produits de réaction gazeux et la vapeur non réagie de la zone de réaction, caractérisé par des moyens d'alimentation pour introduire de la vapeur d'eau dans ladite zone de réaction, lesdits moyens d'alimentation de vapeur comprenant un réservoir pour recevoir et pour contenir de l'eau, des moyens de chauffage pour transformer cette eau en vapeur, une pompe à air pour introduire de l'air dans ledit réservoir et un tuyau d'arrivée de vapeur communiquant avec une rampe d'injection percée de petits trous le long de sa longueur afin d'introduire dans ladite zone de réaction la vapeur produite dans ledit réservoir.

6. Appareil selon la revendication 5, caractérisé en ce que ledit réacteur est fait d'une matière réfractaire.

7. Appareil selon la revendication 5 ou 6 caractérisé en ce qu'au tuyau d'arrivée de vapeur sont branchées plusieurs rampes d'injection dont chacune est percée d'une série de petits trous le long de sa longueur afin d'injecter la vapeur dans ladite zone de réaction.

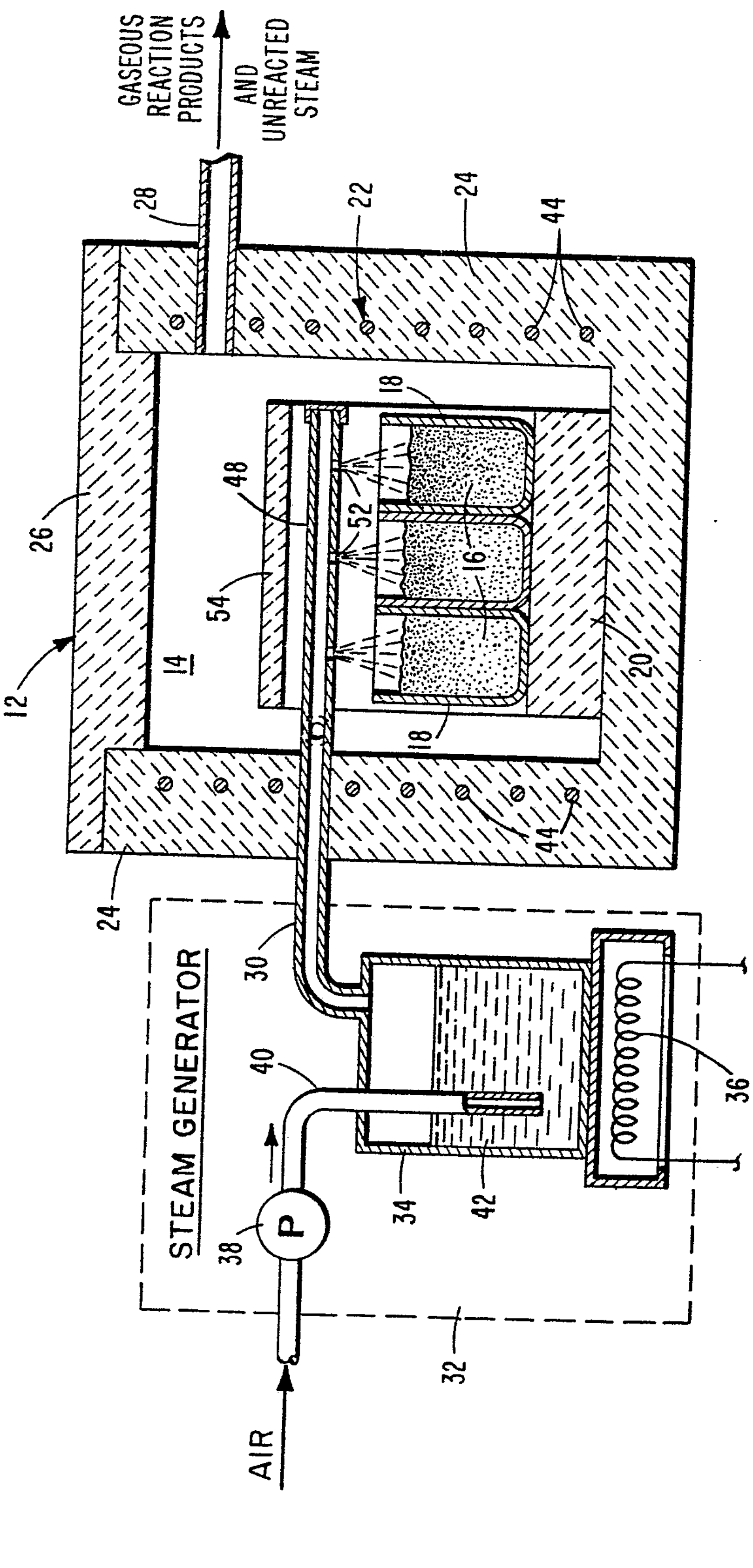
GASEOUS REACTION PRODUCTS AND UNREACTED STEAM
STEAM GENERATOR
AIR
P
12
14
16
18
20
22
24
26
28
30
32
34
36
38
40
42
44
48
52
54

FIG.1

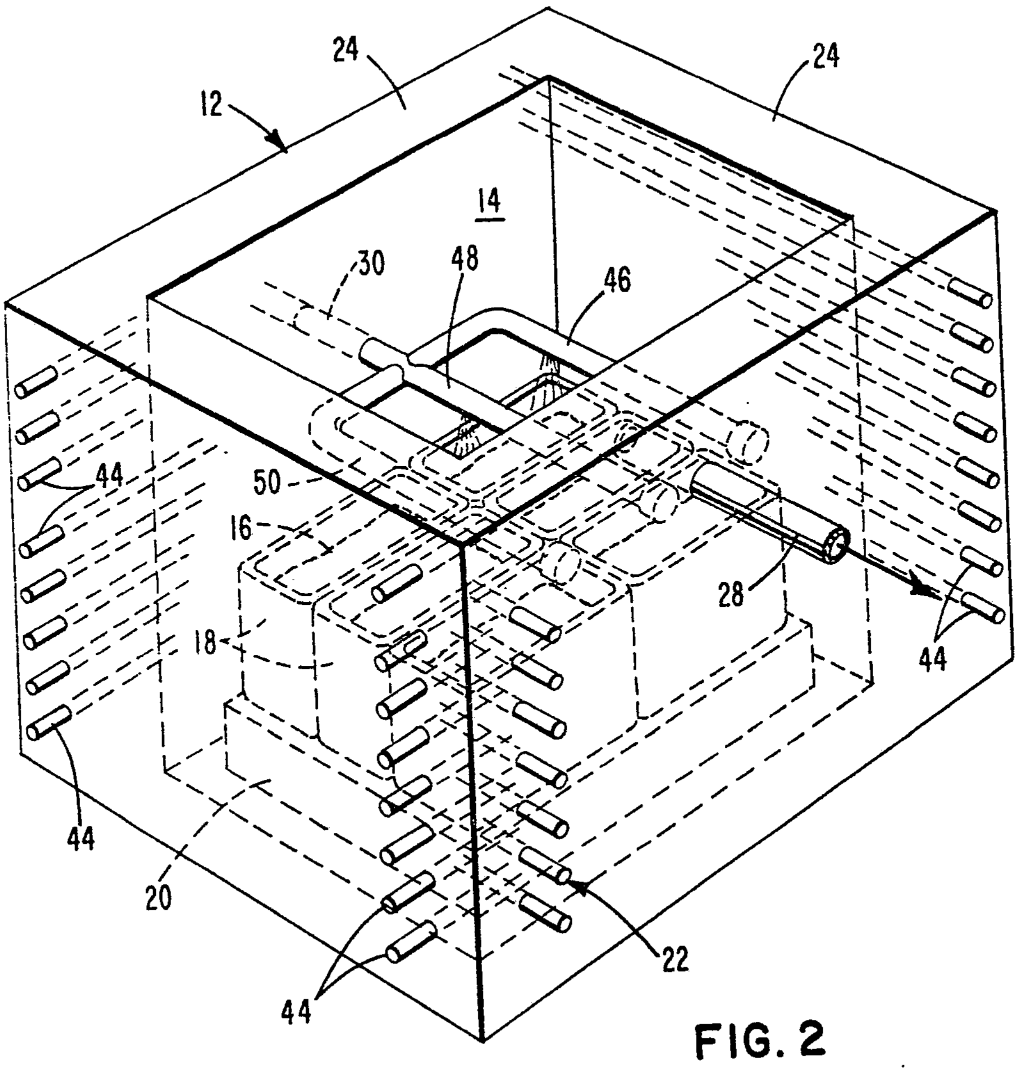


FIG. 2

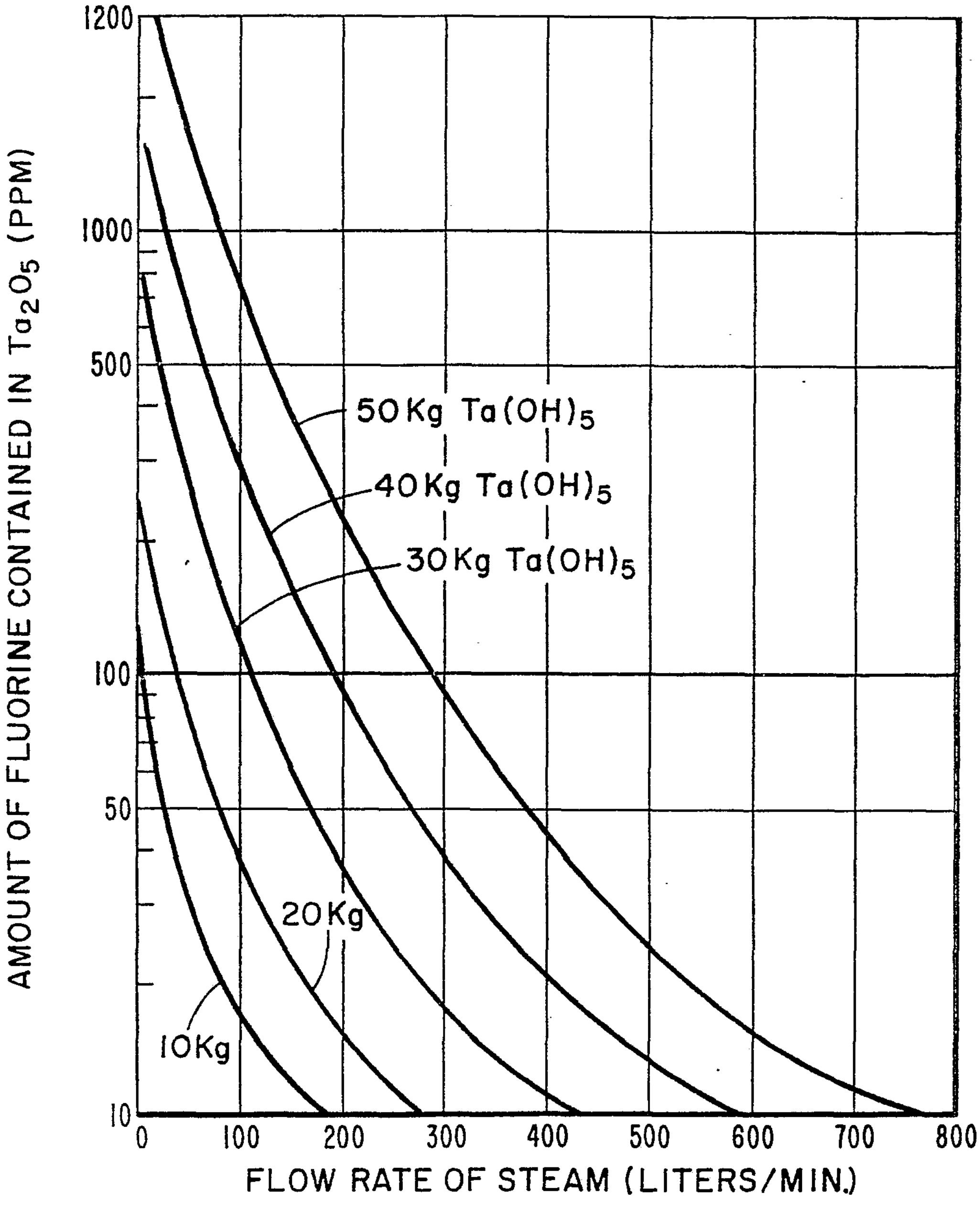

1200
1000
500
100
50
10
0
100
200
300
400
500
600
700
800
AMOUNT OF FLUORINE CONTAINED IN $Ta_2O_5$ (PPM)
FLOW RATE OF STEAM (LITERS/MIN.)
50Kg $Ta(OH)_5$
40Kg $Ta(OH)_5$
30Kg $Ta(OH)_5$
20Kg
10Kg


FIG. 3

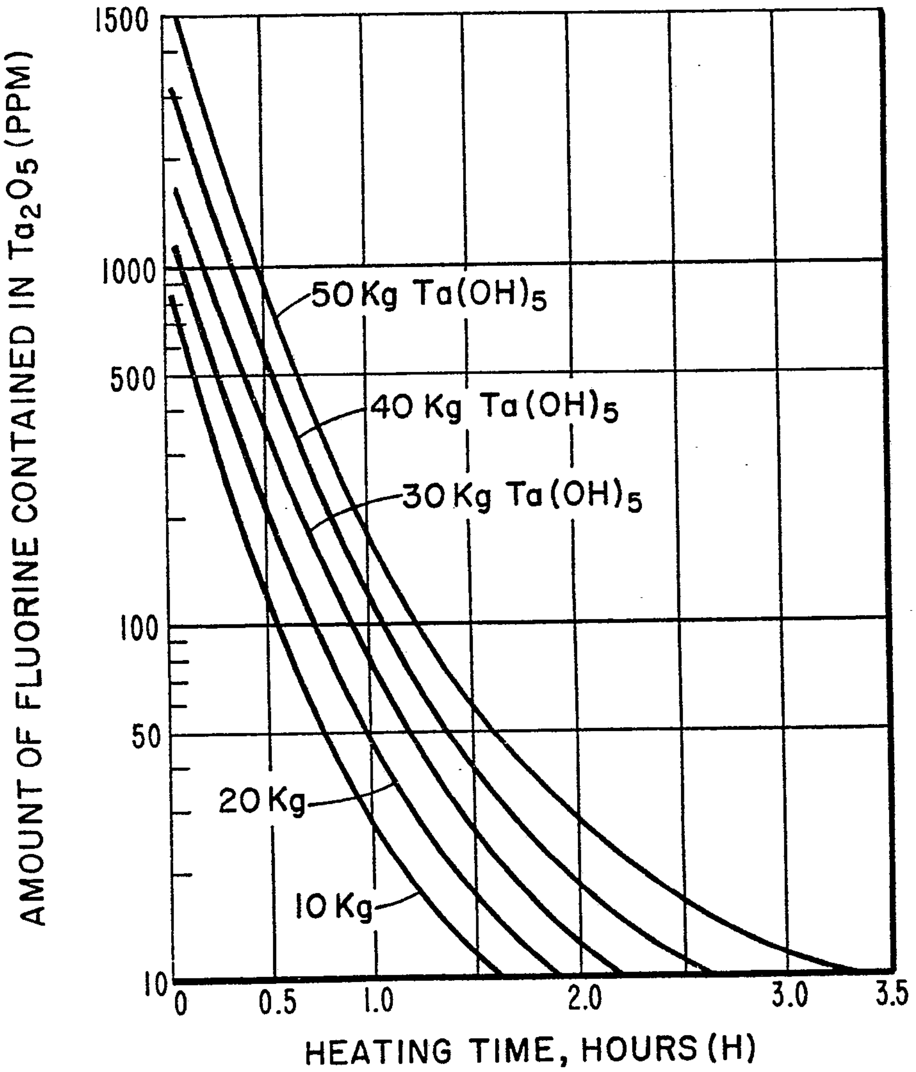

1500
1000
500
100
50
10
0
0.5
1.0
2.0
3.0
3.5
50 Kg Ta(OH)5
40 Kg Ta(OH)5
30 Kg Ta(OH)5
20 Kg
10 Kg
AMOUNT OF FLUORINE CONTAINED IN Ta2O5 (PPM)
HEATING TIME, HOURS (H)


FIG. 4